# EUROPÄISCHE PATENTSCHRIFT

(11) **EP 0 492 331 B1**
(45) Veröffentlichungstag und Bekanntmachung des Hinweises auf die Patenterteilung: **12.10.1994**
(21) Anmeldenummer: 91121494.8
(22) Anmeldetag: 14.12.1991
(51) Int. Cl.: F16K 1/226

(54) **Absperr- oder Regelklappe**
Butterfly valve
Vanne-papillon

(30) Priorität: 21.12.1990 DE 4041086
(43) Veröffentlichungstag der Anmeldung: 01.07.1992
(73) Patentinhaber: Friatec Aktiengesellschaft Keramik- und Kunststoffwerke, D-68229 Mannheim (DE)
(72) Erfinder: Büch, Wolfgang, Dipl.-Ing., W-6670 St. Ingbert (DE)
(74) Vertreter: Klose, Hans, Dipl.-Phys.

(56) Entgegenhaltungen:
- DE-B- 1 228 878
- US-A- 2 809 060
- PATENT ABSTRACTS OF JAPAN vol. 7, no. 269 (M-259)(1414) 30. November 1983 & JP-A-58 146 774 (HITACHI SEISAKUSHO K.K.) 1. September 1983

## Beschreibung

Die Erfindung bezieht sich auf eine Absperr- oder Regelklappe gemäß den im Oberbegriff des Patentanspruchs 1 angegebenen Merkmalen.

Aus der japanischen Patentanmeldung 58-146 774 ist ein derartiges Klappenventil mit einem Gehäuse bekannt, in welchem eine Klappenscheibe drehbar gelagert ist. Diese Klappenscheibe enthält eine Kammer zur Aufnahme eines Dichtringes, welcher mit einer Dichtfläche in der geschlossenen Stellung der Klappenscheibe an einer zugeordneten Sitzfläche im Gehäuse anliegt. Der Dichtring enthält eine Anzahl von gebogenen Metallkörpern, welche als partielle Verstärkungen dienen und in welche Preßbolzen eingreifen. Die als Segmente ausgebildeten Metallkörper sind jeweils vom Gummi des Dichtelements vollständig umschlossen. Bei der Herstellung dieses Dichtringes sind besondere Vorkehrungen erforderlich, damit diese Metallkörper ordnungsgemäß auf dem Umfang angeordnet und ausgerichtet werden können und in der erforderlichen Weise vollständig in den Gummi eingebettet werden können. Der Dichtungsring wird mittels eines Halteringes auf der Klappenscheibe festgelegt, wobei eine Kammer vorgesehen ist, welche radial nach außen offen ist und einen rechteckförmigen Querschnitt aufweist. Zur Befestigung des Halteringes auf der Klappenscheibe sind Schrauben vorgesehen, welche die Kammer sowie den Dichtungsring durchdringen. In dem Haltering sind die erwähnten Preßbolzen befestigt und es ist ein hoher Fertigungsaufwand erforderlich, zumal für jeden gebogenen Metallkörper zwei derartige Preßbolzen notwendig sind. Der Dichtring weist ein vergleichsweise großes Volumen auf und erfordert einen nicht unerheblichen Material- und Fertigungsaufwand.

Aus der GB 1 546 621 C1 ist ein Klappenventil mit einem im Querschnitt T-förmigen Sitzring bzw. Dichtring bekannt. Das Gehäuse weist eine gleichfalls T-förmige und radial nach innen zur Klappenscheibe sich öffnende Kammer auf, welche mittels eines Befestigungsringes im Bereich einer axialen Stirnfläche des Gehäuses abgeschlossen ist. Der Dichtring weise einen Kammerungsteil auf, welcher in seinen beiden axialen Stirnflächen jeweils eine Umfansrille enthält. In dieser Umfangsrille sind flache Streifen aus steifem Metall eingesetzt. Diese Streifen erstrecken sich von der jeweiligen Stirnfläche her über einen großen Teil der Breite des Kammerungsteils, wodurch eine nicht unerhebliche Schwächung desselben bedingt ist und zusätzliche Maßnahmen zur funktionssicheren Festlegung in der Praxis nicht zu vermeiden sind. Ziel der vorbekannten Anordnung ist es, eine über den Umfang des Dichtringes möglichst geschlossene Versteifung mittels den genannten Metallstreifen zu erhalten.

Desweiteren ist aus der AT 215 243 C1 ein Dichtring bekannt, welcher einen Querschnitt ähnlich eines Hufeisens aufweist. Die in einer Kammer der Klappenscheibe angeordneten freien Enden des Dichtringes sind als Wülste ausgebildet und mit Verstärkungseinlagen versehen. Diese Verstärkungseinlagen sind ringförmig ausgebildet, erstrecken sich über den gesamten Umfang des Dichtringes und enthalten dünne Drähte.

Auch aus der AT 318 339 C1 ist ein Dichtring bekannt, welcher einerseits einen metallischen Grundkörper und andererseits eine aufgeklebte oder aufvulkanisierte Weichdichtungsauflage enthält. Das Aufkleben oder Vulkanisieren dieser Weichdichtungsauflage erfordert besondere Herstellungsmaßnahmen, um die gewünschte innige Verbindung zwischen Metall und Gummi oder dergleichen zu erzielen.

Schließlich ist aus der DE 37 01 887 A1 ein elastischer Lagerkörper einer Gelenkwelle bekannt, wobei dieser Lagerkörper über seinen Umfang verteilte Ausnehmungen aufweist. In diese Ausnehmungen sind wahlweise Füllkörper einsetzbar, um die Steifigkeit oder die Dämpfungseigenschaften des derart ausgebildeten Zwischenlagers vorzugeben. Die als Bolzen ausgebildeten Füllkörper dienen nicht zur Befestigung oder Festlegung des elastischen Lagerkörpers, zumal die Enden dieser Füllkörper oder Bolzen nicht in einer Kammer oder dergleichen enden.

Gelangen Absperr- oder Regelklappen der eingangs genannten Art in Rohrleitungssystemen für flüssige Medien zum Ensatz, so können Störungen an dem Dichtungsring durch kritische Strömungsverhältnisse verursacht werden. Das Medium kann hierbei erhebliche Kräfte auf den aus einem elastomeren Werkstoff oder Gummi bestehenden Dichtring ausüben, wodurch dessen sichere Befestigung in der Klappenscheibe nachteilig beeinträchtigt wird. Der Fertigungsaufwand für die eingangs erläuterten, armierten Dichtringe ist nicht unerheblich, wobei die Befestigung und Verankerung in der Klappenscheibe oder dem Gehäuse zusätzliche Maßnahmen erfordert und ein Austausch mit nichtarmierten Dichtringen in der Regel nicht ohne weiteres möglich ist. Ferner ergeben sich in der Praxis Schwierigkeiten dadurch, daß erst nach dem Einbau der Klappe in die Rohrleitung aufgrund besonderer Gegebenheiten in dem Rohrleitungssystem die kritischen Strömungsverhältnisse durch auftretende Störungen der Absperr- oder Regelklappe erkannt werden.

Hiervon ausgehend liegt der Erfindung die Aufgabe zugrunde, die Absperrklappe oder Regelklappe der genannten Art dahingehend weiterzubilden, daß bei einfacher Konstruktion und mit geringem Aufwand auch unter Einwirkung kritischer Strömungsverhältnisse eine funktionssichere Abdichtung gewährleistet wird. Der Fertigungs- und/oder Materialaufwand soll gering sein, wobei insbesondere Änderungen der Klappenscheibe oder des Gehäuses vermieden werden sollen. Der Dichtring soll in der Klappenscheibe zuverlässig verankert werden, ohne daß hierzu aufwendige Verfahren oder Werkzeuge notwendig werden.

Die Lösung dieser Aufgabe erfolgt gemäß den im Kennzeichen des Patentanspruchs 1 angegebenen Merkmalen.

Die erfindungsgemäß vorgeschlagene Absperrklappe oder Regelklappe zeichnet sich durch eine funktionssichere Konstruktion aus und durch die bevorzugt im Bereich der kritischen Beanspruchung angeordneten Verstärkungen werden auch unter extremen Betriebsbedingungen Beschädigungen oder gar ein Herausreißen des Dichtungsringes aus der Kammer zuverlässig vermieden. Die Verstärkungen werden in zweckmäßiger Weise in den Bereichen am Umfang der Klappenscheibe angeordnet, in welchen Bereichen unter Einwirkung kritischer Strömungsverhältnisse ein Versagen des Dichtungringes zu befürchten ist. Die partiellen Verstärkungen sind als Stifte ausgebildet, welche im wesentlichen orthogonal zur Ebene des Dichtungsringes in entsprechende Bohrungen desselben eingesetzt sind. Die den Dichtring zumindest teilweise aufnehmende Kammer ist zwar zweckmäßig auf der Klappenscheibe angeordnet, doch kann der im Rahmen der Erfindung entsprechend die Kammer mit dem Dichtring auch im Bereich des Sitzringes oder als Teil desselben ausgebildet sein. Die Kammer und der Dichtring weisen einen nach innen sich erweiternden, insbesondere im wesentlichen T-förmigen, Querschnitt auf. Der Dichtring enthält einen Kammerungsteil, dessen Länge größer ist als die Länge des die Dichtfläche aufweisenden Teils des Dichtringes. Der zur Festlegung des Dichtringes vorgesehene Haltering ist mittels Schrauben befestigt, welche außerhalb der Kammer sich befinden und somit weder die Kammer noch den Dichtring durchdringen. Die im Kammerungsbereich vorgesehenen partiellen Verstärkungen des Dichtringes in Form von Stiften sind weder im Haltering noch in der Klappenscheibe oder dem Sitzring verankert und weisen eine Länge auf, welche um einen vorgebenen Betrag kürzer ist als die Länge des erweiterten Kammerteils, welcher den Kammerungsbereich des Dichtringes aufnimmt. Die Herstellung der Kammer und ebenso die Anordnung der Stifte erfordert keinen besonderen Fertigungsaufwand. Die Stifte weisen zweckmäßig über ihre gesamte Länge im wesentlichen die gleichen Ausmessungen auf und sind bevorzugt mit einer zylindrischen Außenfläche ohne Stufen, Gewinde oder dergleichen versehen. Da die Schrauben zur Festlegung des Halteringes außerhalb der Kammer angeordnet sind, wird insoweit eine Schwächung des Querschnitts des Dichtringes vermieden.

Die als Stifte ausgebildeten Verstärkungen sind in zwei diametralen Winkelbereichen über den Umfang verteilt angeordnet, und zwar in den zur Drehachse der Klappenscheibe den größten Abstand aufweisenden Winkel- bzw. Umfangsbereichen. Die erfindungsgemäße Verstärkung nur in diesen Bereichen ist einfach und kostengünstig zu verwirklichen und eine Änderung bestehender Dichtungsmodelle ist nicht erforderlich. Es werden keine spezialangefertigten Dichtringe benötigt, sondern die normalerweise zum Einsatz gelangenden Dichtringe werden in der vorgeschlagenen Weise mittels den Stiften verstärkt, welche ein Herauslösen des Dichtringes aus der Klappenscheibe verhindern.

Besondere Ausgestaltungen und Weiterbildungen der Erfindung sind in den Unteransprüchen angegeben.

Die Erfindung wird nachfolgend anhand der in der Zeichnung dargestellten Ausführungsbeispiele näher erläutert. Es zeigen:
- Fig. 1: einen Schnitt durch die Klappe in einer Ebene quer zur Längsachse, wobei die Klappenscheibe die geöffnete Position einnimmt,
- Fig. 2: in einer seitlichen Ansicht die Klappe gemäß Fig. 1,
- Fig. 3: vergrößert einen Ausschnitt der Fig. 2.

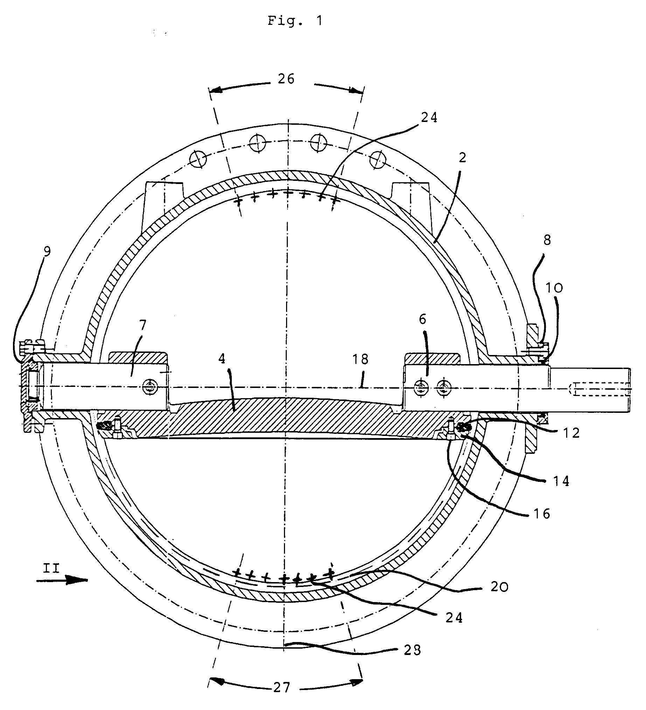

In Fig. 1 ist ein Gehäuse 2 dargestellt, in welchem eine Klappenscheibe 4 mittels zwei Wellenzapfen 6, 7 schwenkbar gelagert ist. Die Lagerung bzw. Wellenzapfen 6, 7 sind mittels Deckeln 8, 9 und einer Dichtung 10 gegenüber dem Außenraum abgedichtet. Die Klappenscheibe 4 ist in hier nicht weiter zu erläuternder Weise mit den beiden Wellenzapfen 6, 7 drehfest verbunden und ist hier in ihrer Offenstellung dargestellt. Die Klappenscheibe enthält einen Dichtring 12, welcher über einen Halte- oder Anpreßring 14 und eine Anzahl von über den Umfang verteilten Schrauben 16 festgelegt ist. Die Klappenscheibe 4 ist exzentrisch zur Drehachse 18 angeordnet und kann in einer Drehung von im wesentlichen 90° um die Drehachse 18 in die Schließstellung gebracht werden. In der Schließstellung liegt der Dichtring 12 an einem Sitzring 20 des Gehäuses 2 an, um das Medium abzusperren, welches durch die an das Gehäuse 2 angeschlossene Rohrleitungssystem strömt. Gemäß der jeweiligen Winkelstellung der Klappenscheibe 4 wird der Strömungsquerschnitt für das Medium in der erforderlichen Weise vorgegeben. Die Schrauben 16 zur Befestigung des Halte- oder Anpreßringes 14 durchdringen den Dichtring 12 nicht, sondern sie liegen auf einem Lochkreis, dessen Durchmesser kleiner ist als der Innendurchmesser des Dichtringes 12.

Mit gestrichelten Linien 22 ist der Dichtring 12 in der geschlossenen Stellung der Klappenscheibe 4 angedeutet. Des weiteren sind mittels kleinen Kreuzen Achsen von partiellen Verstärkungen im Bereich der kritischen Beanspruchung des Dichtringes angedeutet. Wie nachfolgend noch zu erläutern ist, sind diese Verstärkungen als Stifte ausgebildet und ferner in zwei diametralen Winkelbereichen 26, 27 über den Umfang verteilt vorgesehen. Die beiden Winkelbereiche 26, 27 weisen eine vorgegebene Größe, zweckmäßig zwischen 25 bis 35 Winkelgraden, bevorzugt in der Größenordnung von 30 Winkelgraden, auf. Innerhalb der Winkelbereiche sind die als Stifte ausgebildeten Verstärkungen äquidistant mit Abständen zwischen 30 bis 40 mm zueinander angeordnet. Der Dichtring 12 weist in seinem Kammerungsteil entsprechende Bohrungen auf, in welche die Stifte eingesetzt sind. Wie ersichtlich, sind die Winkelbereiche 26, 27 symmetrisch bezüglich der Axialebene 28 angeordnet, welche orthogonal zur Drehachse 18 der Klappenscheibe 4 verläuft.

Alternativ zu der Anordnung auf der Klappenscheibe könnte der erfindungsgemäß ausgebildete Dichtring sowie dessen Festlegung im Gehäuse vorgesehen sein. In diesem Falle würden die Schrauben zur Befestigung des Halteringes auf einem Lochkreis liegen, welcher einen größeren Durchmesser aufweist, als der Außendurchmesser des Dichtringes bzw. der im Gehäuse entsprechend angeordneten Kammer.

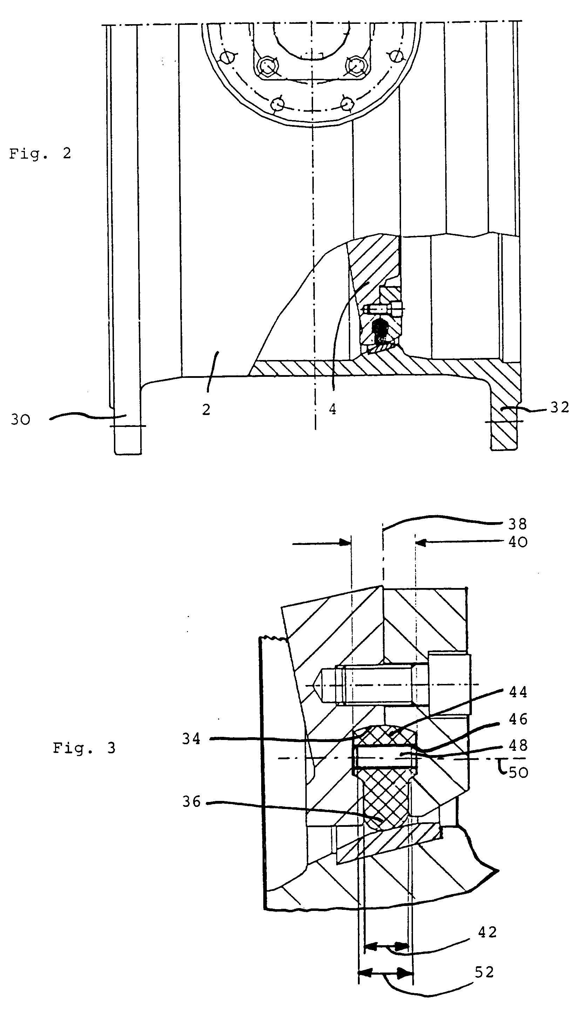

Fig. 2 zeigt in einer Ansicht gemäß Blickrichtung II in Fig. 1 das Gehäuse 2, wobei teilweise geschnitten auch die Klappenscheibe 4 in der Schließstellung zu erkennen ist. In dieser Schließstellung liegt der Dichtring 12 an dem Sitzring 20 an und sperrt den Strömungsweg für das Medium in der Rohrleitung ab, welche in bekannter Weise an die beiden Flansche 30, 32 des Gehäuses 2 angeschlossen ist.

Fig. 3 zeigt vergrößert und in einem Ausschnitt die Klappenscheibe 4 und den mit dieser mittels den Schrauben 16 verbundenen Halte- bzw. Anpreßring 14. Die Klappenscheibe 4 und der Anpreßring 14 sind radial außen derart ausgebildet, daß eine Kammer 34 zur Aufnahme des Dichtringes 12 vorhanden ist, dessen radial außenliegende Dichtlippe 36 am Sitzring 20 dichtend anliegt. Orthogonal zu der Ebene 38, in welcher die ringförmige Dichtlippe 36 liegt, weist der erweiterte innere Teil der Kammer 34 eine Länge 40 auf, welche größer ist als ein Abstand 42 radial außen zwischen den gegenüberliegenden Flächen der Klappenscheibe 4 einerseits und des Anpreßrings 14 andererseits.

Wie ersichtlich, weist der Dichtring 12 einen im Prinzip T-artigen Querschnitt mit einem radial innenliegenden Kammerungsteil 44 auf, welcher in der genannten Kammer 34 festgelegt ist. Vor dem Zusammenbau weist der erweiterte Kammerungsteil 44 eine größere Länge auf als die erwähnte Länge 40, so daß der aus einem Elastomer bestehende Dichtring in dem Kammerungsteil unter Vorspannung eingespannt ist. Die Dichtlippe 36 ist quer zur Ebene 38 bevorzugt etwas kleiner ausgebildet als der Abstand 42. In dem Kammerungsteil 44 enthält der Dichtring 12 eine Bohrung 46, in welche ein Stift 48 zwecks Verstärkung und/oder verbesserter Verankerung eingesetzt ist. Dieser Stift 48 besteht in zweckmäßiger Weise aus Edelstahl, wodurch Vorteile im Hinblick auf die Festigkeit und das Korrosionsverhalten erreicht werden. Die Achse 50 des Stiftes 48 steht in zweckmäßiger Weise orthogonal zu der Ebene 38 der Dichtlippe 36.

Wie in Verbindung mit Fig. 1 ersichtlich, sind entsprechend den dort angegebenen Kreuzchen nur in dem erwähnten Winkelbereich eine Anzahl derartiger Stifte 48 äqudistant im Kammerungsteil 44 vorgesehen. Der Stift 48 weist eine Länge 52 auf, welche kleiner als die Länge 40 der Kammer 34 ist. Hierdurch wird sichergestellt, daß der Dichtring ordnungsgemäß mittels des Anpreßringes 14 in der Kammer 34 verpreßt wird, ohne daß hierbei die in den beiden vorgegebenen Winkelbereichen vorhandenen Stift stören. Andererseits ist die Länge 52 aber größer als der Abstand 42, wodurch ein Herauslösen der Stifte und letztendlich des Dichtringes 12 zuverlässig unterbunden wird.

## Patentansprüche

1. Absperr- oder Regelklappe mit einem Gehäuse (2), mit einer im Gehäuse (2) drehbar gelagerten Klappenscheibe (4) und mit einem eine Dichtfläche aufweisenden Dichtring (12), der zumindest teilweise in einer Kammer (34), insbesondere der Klappenscheibe (4), angeordnet ist, wobei der Dichtring (12) eine vorgebbare Anzahl von partiellen Verstärkungen aufweist, welche aus einem Material mit einer höheren Festigkeit als der Werkstoff des Dichtringes bestehen,
dadurch gekennzeichnet, daß die Verstärkungen als Stifte (48) ausgebildet sind,
daß die Stifte (48) in einem mit vergrößerter Länge (40) ausgebildeten Teil der Kammer (34) angeordnet sind
und daß der Dichtring (12) einen insbesondere im wesentlichen T-förmigen Querschnitt mit einem erweiterten Kammerungsteil (44) aufweist, in welchem eine Anzahl Bohrungen (46) zur Aufnahme der Stifte (48) angeordnet ist.

2. Klappe nach Anspruch 1, dadurch gekennzeichnet, daß die Stifte (48) aus Edelstahl ausgebildet sind und/oder im wesentlichen orthogonal zur Ebene (38) angeordnet sind, in welcher die Dichtlippe (36) liegt.

3. Klappe, insbesondere nach Anspruch 1 oder 2, wobei die Kammer (34) für den Dichtring (12) auf einer Seite von einem Haltering (14) begrenzt wird, welcher in bekannter Weise mittels Schrauben (16) befestigt ist,
dadurch gekennzeichnet, daß die Schrauben (16) außerhalb der Kammer (34) angeordnet sind und der Dichtring (12) einen größeren oder kleineren Durchmesser aufweist, als der Lochkreis, auf welchem die Schrauben (16) angeordnet sind.

4. Klappe nach einem der Ansprüche 1 bis 3, dadurch gekennzeichnet, daß die Länge (52) des Stifte (48) kleiner ist als die, insbesondere orthogonal zur Ebene (38), gemessene Länge (40) des Teils der Kammer (34), in welcher der Kammerungsteil des Dichtringes (12), insbesondere mittels des Halteringes (14), festgelegt ist.

5. Klappe nach einem der Ansprüche 1 bis 4, dadurch gekennzeichnet, daß die Länge (52) des Stiftes (48) größer ist als ein im Bereich der Dichtlippe (36) vorhandener Abstand (42) zwischen der Klappenscheibe 4 und dem Anpreßring (14).

6. Klappe nach einem der Ansprüche 1 bis 5, dadurch gekennzeichnet, daß die Stifte (48) ausschließlich in zwei diametralen Winkelbereichen (26, 27) angeordnet sind, durch welche insbesondere eine orthogonal zur Drehachse (18) der Klappenscheibe (4) verlaufende Ebene verläuft.

7. Klappe nach einem der Ansprüche 1 bis 6, dadurch gekennzeichnet, daß die Bereiche (26, 27) sich über den Umfang des Dichtringes (12) über Winkel zwischen 25° bis 35°, bevorzugt im wesentlichen über 30°, erstrecken.

8. Klappe nach einem der Ansprüche 1 bis 7, dadurch gekennzeichnet, daß die Stifte (48) über den Umfang des Dichtringes (12) jeweils einen Abstand zwischen 30 bis 40 mm untereinander aufweisen.

9. Klappe nach einem der Ansprüche 1 bis 8, dadurch gekennzeichnet, daß die Stifte (48) über ihre gesamte Länge im wesentlichen die gleichen Außenabmessungen aufweisen und insbesondere eine zylindrische Außenkontur aufweisen.

## Claims

1. Butterfly valve comprising a housing (2), a valve disc (4) rotatably mounted in the housing (2) and a sealing ring (12) which has a sealing surface and is arranged at least partially in a chamber (34), particularly in the valve disc (4), the sealing ring (12) having a predeterminable number of partial reinforcements consisting of a material having a higher strength than the material of the sealing ring, characterised in that the reinforcements are in the form of pins (48), that the pins (48) are arranged in a part of the chamber (34) with an extended length (40) and that the sealing ring (12) has in particular a substantially T-shaped cross section with an expanded chamber part (44) in which a number of bores (46) are arranged to receive the pins (48).

2. Valve according to claim 1, characterised in that the pins (48) are made of high-grade steel and/or are arranged substantially perpendicularly to the plane (38) in which the sealing lip (36) is situated.

3. Valve, particularly according to claim 1 or claim 2, wherein the chamber (34) for the sealing ring (12) is defined on one side by a retaining ring (14) which is secured in the known manner by means of screws (16), characterised in that the screws (16) are arranged outside the chamber (34) and the sealing ring (12) has a larger or smaller diameter than the hole circle on which the screws (16) are arranged.

4. Valve according to one of claims 1 to 3, characterised in that the length (52) of the pins (48) is smaller than the length (40), particularly measured perpendicularly to the plane (38), of that part of the chamber (34) in which the chamber part of the sealing ring (12) is fixed, particularly by means of the retaining ring (14).

5. Valve according to one of claims 1 to 4, characterised in that the length (52) of the pins (48) is greater than a space (42) between the valve disc (4) and the pressure ring (14) in the region of the sealing lip (36).

6. Valve according to one of claims 1 to 5, characterised in that the pins (48) are arranged exclusively in two diametrical sectors (26, 27) through which a plane extending in particular perpendicularly to the axis of rotation (18) of the valve disc (4) extends.

7. Valve according to one of claims 1 to 6, characterised in that the regions (26, 27) extend over the circumference of the sealing ring (12) over angles of between 25° and 35°, preferably substantially over 30°.

8. Valve according to one of claims 1 to 7, characterised in that the pins (48) are at a distance of between 30 and 40 mm from one another over the circumference of the sealing ring (12).

9. Valve according to one of claims 1 to 8, characterised in that the pins (48) have substantially the same external dimensions over their entire length and in particular have a cylindrical external contour.

## Revendications

1. Vanne-papillon d'arrêt ou de réglage comprenant un corps (2), avec un papillon (4) tourillonnant dans le corps (2), et une bague d'étanchéité (12) portant une surface d'étanchéité qui est disposée au moins partiellement dans une chambre (34), notamment prévue dans le papillon (4), la bague d'étanchéité (12) présentant un nombre pouvant être prédéterminé de renforcements partiels qui sont composés d'une matière de plus haute résistance mécanique que la matière de la bague d'étanchéité,
***caractérisée en ce que*** les renforcements sont constitués par des chevilles (48),
***en ce que*** les chevilles (48) sont disposées dans une partie de la chambre (34) qui est de plus grande longueur (40), et
***en ce que*** la bague d'étanchéité (12) présente une partie d'encastrement élargie (44), dans laquelle sont disposés une série de perçages (46) destinés à recevoir les chevilles (48).

2. Vanne-papillon selon la Revendication 1, ***caractérisée en ce que*** les chevilles (48) sont réalisées en acier inoxydable et/ou sont disposées sensiblement perpendiculairement au plan (38) dans lequel se trouve la lèvre d'étanchéité (36).

3. Vanne-papillon selon la Revendication 1 ou 2, dans laquelle la chambre (34) de logement de la bague d'étanchéité (12) est limitée d'un côté par une bague de retenue (14) qui est fixée d'une façon connue au moyen de vis (16),
***caractérisée en ce que*** les vis (16) sont disposées en dehors de la chambre (34) et la bague d'étanchéité (12) présente un diamètre supérieur ou inférieur à celui du cercle de perforation sur lequel les vis (16) sont disposées.

4. Vanne-papillon selon l'une des Revendications 1 à 3, ***caractérisée en ce que*** la longueur (52) des chevilles (48) est plus petite que la longueur (40), mesurée notamment perpendiculairement au plan (38) de la partie de la chambre (34) dans laquelle la partie d'encastrement de la bague d'étanchéité (12) est fixée, notamment au moyen de la bague de retenue (14).

5. Vanne-papillon selon l'une des Revendications 1 à 4, ***caractérisée en ce que*** la longueur (52) de la cheville (48) est plus grande que la distance (42) ménagée entre le papillon (4) et la bague de pression (14) dans la région de la lèvre d'étanchéité (36).

6. Vanne-papillon selon l'une des Revendications 1 à 5, ***caractérisée en ce que*** les chevilles (48) sont disposées exclusivement dans deux régions angulaires diamétralement opposées (26, 27) par lesquelles passe en particulier un plan orienté orthogonalement à l'axe de rotation (18) du papillon (4).

7. Vanne-papillon selon l'une des Revendications 1 à 6, ***caractérisée en ce que*** les régions (26, 27) s'étendent sur la circonférence de la bague d'étanchéité (10) sur des angles d'entre 25° et 35°, de préférence sensiblement supérieurs à 30°.

8. Vanne-papillon selon l'une des Revendications 1 à 7, ***caractérisée en ce que*** les chevilles (48) présentent sur la circonférence de la bague d'étanchéité (12) une distance d'écartement d'entre 30 et 40 mm.

9. Vanne-papillon selon l'une des Revendications 1 à 8, ***caractérisé en ce que*** les chevilles possèdent sensiblement les mêmes dimensions extérieures sur toute leur longueur et présentent en particulier un contour extérieur cylindrique.
